# EUROPEAN PATENT SPECIFICATION

(11) **EP 0 540 031 B1**
(45) Date of publication and mention of the grant of the patent: **11.06.1997**
(21) Application number: 92118626.8
(22) Date of filing: 30.10.1992
(51) Int. Cl.: B32B 27/08, B32B 27/28

(54) **Thermoplastic coupled multilayer structure**
Thermoplastisch verbundende Mehrschichtstruktur
Structure multicouche liée thermoplastiquement

(30) Priority: 31.10.1991 IT MI912895
(43) Date of publication of application: 05.05.1993
(73) Proprietor: ENICHEM S.p.A., I-20124 Milano (IT)
(72) Inventor: Pirotta, Giampiero, Dr., I-46030 Cerese di Virgilio (MN) (IT); Fasulo, Gian Claudio, Dr., I-46010 San Silvestro-Mantova (IT); Ghidoni, Dario, Dr., I-46023 Gonzaga-Mantova (IT); Cantamessa, Maurizio, Dr., S. Margherita Ligure, Genova (IT)
(74) Representative: Barz, Peter, Dr.

(56) References cited:
- EP-A- 0 203 425
- EP-A- 0 368 141
- GB-A- 1 427 959
- US-A- 4 243 725
- DATABASE WPIL Derwent Publications Ltd., London, GB;

## Description

The present invention relates to a thermoplastic coupled multilayer structure comprising a vinylaromatic (preferably styrenic) polymer and a polyolefin.

More in particular, the present invention relates to a thermoplastic coupled multilayer structure comprising a vinylaromatic polymer and a polyolefin and which is resistant to chlorofluorohydrocarbons (HCFC) and the processing scraps of which can be recovered and reprocessed without significant deterioration of the physico-mechanical properties after reprocessing.

There are many fields of application wherein films, sheets or plates of a vinylaromatic (e.g. styrene) polymer coupled to a polyolefin (e.g. polyethylene) are used.

GB-A-1427959 discloses laminates comprising an adhesion-promoting primer layer between an olefin polymer layer an a styrene polymer layer.

EP-A-437856 discloses a multilayer composite comprising a surface layer of polyolefin resin, an intermediate layer of a mixture of a polystyrenic resin and a polymer ingredient and a base layer of a polystyrenic resin.

The polyolefin can constitute the outer layer or the inner layer of the coupled multilayer structure, depending on the intended use thereof.

The use of the polyolefin ensures steam impermeability, chemical inertness, satisfactory sealability and suitability for coming into contact with foodstuffs, with only slight or no alterations of the organoleptic characteristics of the latter.

It is known that a thermoplastic coupled multilayer structure comprising at least one polyolefin layer and at least one vinylaromatic polymer layer exhibits excellent resistance to chlorofluorohydrocarbons, provided that the two layers are in close contact with each other. This characteristic makes the coupled multilayer structure particularly suitable for the manufacture of sheets or plates to be used in contact with aggressive chemical substances, such as, for example, sheets for the manufacture of cooling chambers, tops and inner door linings for refrigerators and freezers, wherein resistance to the chlorofluorohydrocarbons used for producing the expanded covering insulating polyurethane foams is required.

One of the drawbacks of this type of coupled multilayer structures is that, as the two polymers cannot be made adhesive by lamination and/or coextrusion, it is necessary to interpose between the various layers of the coupled multilayer structure an adhesive to ensure a close and complete contact throughout all of the surfaces of the polymeric layers. The adhesives generally used are the synthetic ones, consisting of thermoplastic resins such as ethylene-vinylacetate copolymers (EVA), cellulosic esters and ethers, alkyl esters of acrylic acids, polyamides, polyurethanes, polyesters or synthetic rubbers, hot melts, etc. with thicknesses ranging from 1 to 100 µm, preferably 10 to 50 µm.

Another drawback of this type of coupled multilayer structures is that the constituting polymers are not chemically compatible with each other, which drawback prejudices the possibility of recovering the processing scraps as long as the two polymers are not physically separated beforehand.

The chemical incompatibility of the two polymers is not eliminated or reduced by the presence of bonding or adhesive agents optionally used for ensuring a close contact between the various layers. The presence of an adhesive or bonding agent, on the contrary, causes further problems in the reprocessing of the scraps, owing to the poor thermal stability of the compounds used.

An object of the present invention is to provide a thermoplastic coupled multilayer structure comprising at least one layer of vinylaromatic polymer and at least one layer of polyolefin, in close contact with each other, which does not show the above-reported drawbacks.

More in particular, object of the present invention is the provision of a thermoplastic coupled multilayer structure comprising at least one layer of vinylaromatic polymer and at least one layer of polyolefin, wherein the various constituting layers are in close contact with each other, without any interposition of an adhesive or bonding agent, and wherein the processing scraps can be reused without deterioration of the physico-mechanical properties after reprocessing.

It has now been found that the above and other objects which will become clear from the following description, may be achieved by using at least one layer of a blend consisting of (i) 70 to 30% by wt. of a vinylaromatic polymer and (ii) 30 to 70% by wt. of a vinylaromatic monomer-butadiene block copolymer.

Subject matter of the present invention, therefore, is a thermoplastic coupled multilayer structure comprising, in direct contact with each other:
(A) at least one layer of a blend consisting of (i) 70 to 30% by wt. of a vinylaromatic polymer and (ii) 30 to 70% by wt. of a vinylaromatic monomer-butadiene block copolymer;
(B) at least one polyolefin layer and, optionally,
(C) one or more layers of vinylaromatic polymer;
with the proviso that when layer(s) (C) is (are) present, the layer (A) is interposed between layers (B) and (C).

The above composition of the layer (A) allows a complete adhesion between the various layers constituting the coupled multilayer structure of the present invention without making use of a bonding and/or adhesive agent. Furthermore, the processing scraps can be recovered and reprocessed without any significant deterioration of the physico-mechanical properties after reprocessing, and this without resorting to the use of a compatibilizing agent.

The term "complete adhesion" means that blisters or empty interstices or discontinuities in general are not present among the various constituting polymer layers; said characteristic is essential for imparting the required resistance to chemical attack by chlorofluorohydrocarbons to the coupled multilayer structures.

The coupling of polyolefin layer(s) (B) or layer(s) (A) containing a vinylaromatic polymer and, optionally, to layer(s) (C) of a vinylaromatic polymer impairs neither the characteristics of thermoformability of the thus obtained coupled multilayer structure nor the performance of the thermoformed articles obtained by molding and/or drawing said coupled multilayer structures.

The number of polymeric layers forming the coupled multilayer structure can vary within a wide range depending on the desired characteristics. Generally, 2 to 10 polymeric layers are present.

The thickness of each layer can vary within a wide range. Preferably, the thickness of layer (A) (including the vinylaromatic polymer) ranges from 10 to 500 µm and the thickness of each of the other layers ranges from 10 µm to 5 mm depending on the specific applications.

The multilayer structure of the present invention can furthermore comprise one or more different polymeric layers, when particular adhesion, gloss, flowability, antiblocking, gas and vapour barrier etc. characteristics are required.

In the blend of layer (A) the amount of block copolymer (ii) ranges from 30 to 70% by weight and, correspondingly, that of the vinylaromatic polymer (i) ranges from 70 to 30% by weight.

The vinylaromatic polymer (i) can be crystalline or impact resistant.

"Crystalline vinylaromatic polymer" is intended to comprise any thermoplastic solid polymer or copolymer completely or mainly (to at least 50% by weight) constituted by one or more vinylaromatic (styrenic) compounds having general formula (I): 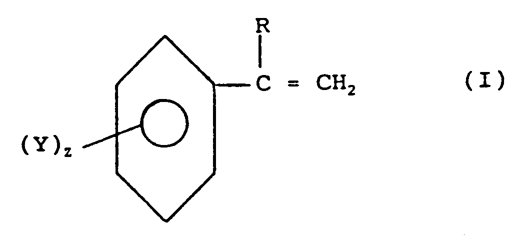 wherein:
R represents hydrogen or C₁-C₄-alkyl (e.g. methyl or ethyl);
z is 0 or an integer of from 1 to 5, and
Y represents halogen (e.g. Cl, Br, F) or C₁-C₄-alkyl.

Examples of vinylaromatic monomers of the above formula (I) are styrene; methylstyrene; mono-, di-, tri-, tetra-, and penta-chlorostyrene and the corresponding alpha-methylstyrenes; styrenes and the corresponding alpha-methylstyrenes which are alkylated in the nucleus, such as ortho- and para-methylstyrenes; ortho- and para-ethylstyrenes; ortho- and para-methyl-alpha-methylstyrenes, etc.

These monomers can be utilized alone or in admixture with each other and/or other copolymerizable monomers such as, for example, maleic anhydride, acrylonitrile, methacrylonitrile, C₁-C₄ alkyl esters of acrylic and methacrylic acid etc.

"Impact-resistant vinylaromatic polymer" is to denote any polymer which is completely or mainly (to at least 50% by weight) constituted by one or more compounds of the above formula (I), alone or in admixture with each other and/or with other copolymerizable monomers such as, for example, maleic anhydride, acrylonitrile, methacrylonitrile, C₁-C₄-alkyl esters of acrylic and methacrylic acid, and which includes a disperse elastomeric phase.

The elastomeric phase can be a diene rubber, such as polybutadiene, high or medium cis and low viscosity polybutadiene, polyisoprene, copolymers of butadiene and/or isoprene with styrene or with other monomers; or an olefinic rubber such as ethylene-propylene copolymers or ethylene-propylene-diene terpolymers, known as EPM and EPDM, respectively.

The amount of elastomeric phase in the impact-resistant vinylaromatic polymer usually ranges from 0.1 to 20% by weight, preferably from 4 to 15% by weight.

It has furthermore been found that improved compatibilizing characteristics can be achieved when the elastomeric phase in the impact-resistant vinylaromatic polymer comprises a mixture of diene rubber and vinylaromatic monomer-conjugated diene block copolymer.

The amount of diene rubber employed usually ranges from 5 to 15% by weight, preferably from 6 to 12% by weight; said diene rubber may be of the above-reported type, e.g. comprise polybutadiene, low viscosity high or medium cis-polybutadiene, polyisoprene, copolymers of butadiene and/or isoprene with styrene or other monomers, etc.

Preferably the vinylaromatic monomer-conjugated diene block copolymer is present in amounts of from 0.5 to 5% by weight. It may be of the type known in the art and available on the market. These block copolymers can be of the linear type and usually contain from 20 to 60% by weight of recurring units of vinylaromatic monomer and, correspondingly, from 80 to 40% by weight of recurring units of conjugated diene.

Examples of corresponding block copolymers are those of the following structures:

B/S (II)

S-(B/S) (III)

wherein S represents a polymeric block based on vinylaromatic monomer and B/S represents a block of vinylaromatic monomer-conjugated diene copolymer of the "random" and/or "tapered" type.

These linear block copolymers may be prepared according to, e.g., the method disclosed in US-A-3,149,182.

The molecular weight of the above block copolymers may vary within a wide range; molecular weights lower than 100,000 are preferred.

The properties, structure and characteristics of these block copolymers are disclosed in Holden "Block and Graft Copolymerization", Chapter 6, pages 133-191.

Linear block copolymers of this type are available on the market, see for example "Stereon® 840" (The Firestone Co. Akron, Ohio), or the S-B/S block copolymers sold by Shell Chemical Company under the trade name "Kraton® 2103", "Kraton® 2104" and "Kraton® 2113" and "SOLPRENE®" sold by Phillips Petroleum Co., etc.

The preparation of the crystalline or impact-resistant vinylaromatic polymers (i) may be carried out according to any known suspension, bulk-suspension or continuous bulk polymerization process.

The vinylaromatic monomer-butadiene block copolymer (ii) used in admixture with the vinylaromatic polymer (i) for the preparation of layer (A), may be of the linear, radial or star-shaped type.

The linear block copolymers (ii) can be of type:

(IV) S-B, (IV)

S₁-B-S₂, (V)

B₁-S₁-B₂-S₂ (VI)

wherein S, S₁ and S₂ are non-elastomeric polymer blocks of vinylaromatic monomer(s) of the above formula (I), having the same or different molecular weights; and B, B₁ and B₂ are elastomeric polymer blocks based on butadiene and having the same or different molecular weights. The molecular weight of these linear block copolymers generally ranges from 10,000 to 300,000.

These linear block copolymers are already known in the literature and described, for example, in US-A-3,265,765. Further information on the physical and structural characteristics of these polymers may be found in B.C. ALLPORT et al., "Block Copolymers", Applied Science Publishers Ltd. 1973.

Between the S, S₁, S₂ and B, B₁ and B₂ polymeric blocks there can be present random and/or tapered segments wherein the transition between the B, B₁ and B₂ blocks and S, S₁ and S₂ blocks is gradual in the sense that the proportion of the vinylaromatic monomer in the diene polymer increases progressively in the direction of the non-elastomeric polymer block while the proportion of the butadiene accordingly decreases progressively; or wherein the vinylaromatic (e.g. styrene) and diene (butadiene) monomers alternate statistically. The (weight average) molecular weights of the random and/or tapered segments preferably range from 500 to 50,000.

The linear block copolymers (ii) are available on the market, for example under the trade name "CARIFLEX® TR 1102 S", (SHELL) or under the trade name "FINAPRENE® 315" (FINA).

A linear block copolymer (ii) particularly preferred in the compositions of the present invention is that of general formula (IV):

B₁ - S₁ - B₂ - S₂ (VI)

wherein B₁, B₂, S₁ and S₂ have the above reported meanings; the (weight) average molecular weight ranges from 30,000 to 250,000; the total content of butadiene monomer units is from 40 to 80% by weight; the (weight) average molecular weight of block B₁ preferably ranges from 0.1 to 0.5 times that of block B₂; the (weight) average molecular weight of block S₁ preferably ranges from 0.25 to 2.0 times that of block S₂ and a copolymeric segment consisting of statistically linked diene and vinylaromatic monomeric units is present between the blocks B₁ and S₁.

This linear block copolymer is known in the literature (see, e.g., IT-B-1,222,429) and is produced and sold by ENICHEM ELASTOMERI under the trade-name "EUROPRENE® SOL T 168".

The radial block copolymers (ii) can be of the following types:

(S'-B')ₖ-X (VII)

(S'₁-B'₁→S'₂)ₙ-X-(S'₂←B'₁)ₘ (VIII)

(S₃-S₄-B'₂→S₅)ₙ-X-(S₅←B'₂-S₄)ₘ (IX)

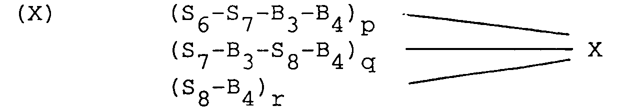

wherein S', S'₁, S'₂, S₃, S₄, S₅, S₆, S₇ and S₈ are non-elastomeric polymer blocks of vinylaromatic monomer(s) of formula (I), of which the polymer block S' in structure (VII) have a monomodal or polymodal, preferably bimodal, molecular weight distribution, whilst each of the polymer blocks from S'₁ to S₈ in structures (VIII), (IX) and (X) has a monomodal molecular weight distribution; B', B'₁, B'₂, B₃ and B₄ are elastomeric polymer block based on butadiene; X is a radical of a polyfunctional coupling agent by means of which the copolymer blocks forming the branches are chemically coupled to one another; k is a integer of not less than 3, generally of from 3 to 10 and preferably 3 or 4; m and n are integers, m being greater than n and the sum of m and n being at least 3, generally of from 3 to 10 and preferably 3 or 4; and p, q and r are integers the sum of which is at least (and preferably greater than) 3.

The symbol → in formulae (VIII) and (IX) means that the transition between the polymer blocks is gradual rather than distinct, in the sense that the proportion of vinylaromatic monomer in the diene polymer increases progressively in the direction of the non-elastomeric polymer block, while the proportion of butadiene accordingly decreases progressively. The (weight average) molecular weights of blocks B'₁→S'₂ and B'₂→S₅ preferably range from 10,000 to 100,000.

These radial block copolymers are already known in the literature and available on the market. Thus, the polymers of formula (VII) are disclosed in DE-A-1,959,922; while US-A-4,086,298 and 4,167,545 disclose the polymers of formulae (VIII) and (IX) and EP-A-153,727 describes the polymers of formula (X).

The coupling agents are described, for example, in GB-A-985,614.

Typical examples of coupling agents are polyepoxides, such as epoxidized polybutadiene, epoxidized soybean oil, epoxidized linseed oil; polyesters such as diethyl-adipate; polyhalides such as silicon tetrachloride, polyisocyanates such as 1,2,4-benzene triisocyanate; polyimines; polyaldehydes; polyketones such as 1,3,6-hexanetrione; polyanhydrides such as pyromellitic di-anhydride; halides of polyacids, such as the chloride of mellitic acid, etc.; polyvinylaromatic compounds such as divinyl-benzene may also be used as coupling agents, as described in US-A-3,280,084. The divinyl-benzene polymerizes to form polyfunctional coupling agents in situ.

The radial block copolymers (ii) are available on the market, such as for example under the trade names "STYROLUX®" (BASF) and "K-RESIN®" (Phillips Petroleum Co.).

The vinylaromatic monomer particularly suitable for the preparation of both the linear and the radial block copolymers (ii) is styrene; alkyl substituted styrenes showing the same copolymerization properties, such as methyl-styrenes, ethyl-styrenes, t.-butyl-styrenes, etc., may also be used.

In these block copolymers (ii), the non-elastomeric polymeric block is preferably composed of polystyrene having a molecular weight of from 5,000 to 250,000. The elastomeric polymer block is polybutadiene having a molecular weight of from 2,000 to 250,000 (preferably from 5,000 to 50,000) or a copolymer of butadiene containing less than 30% and preferably less than 20% by weight of vinylaromatic monomer, such as styrene; the monomer distribution being substantially random.

Polyolefins useful in layer (B) of the thermoplastic coupled multilayer structure of the present invention include polyethylene, polypropylene and ethylene-propylene copolymers having a prevalent content of ethylene such as, for example, copolymers of from 75 to 98% by weight of ethylene and from 25 to 2% by weight of propylene; polybutene and polypentene can also be used to advantage.

The term "polyethylene" includes any ethylene polymer having a density of preferably from 0.85 to 0.97 g/cm³, among which those known as low density polyethylene (LDPE), linear low density polyethylene (LLDPE), and high density polyethylene (HDPE). These polymers are available on the market under the trade names of, for example, "ESCORENE® LL 1201 XV" (LLDPE, EXXON), "RIBLENE® AK 1912" (LDPE, ENICHEM) and "ERACLENE® HUG 5013" (HDPE, ENICHEM).

Linear low density polyethylene (LLDPE) is particularly preferred for use in the multilayer structure of the present invention.

The multilayer structure of the present invention can optionally include one or more layers (C) of vinylaromatic polymer. Such a vinylaromatic polymer may be of the crystalline or impact-resistant type as defined above for component (i) of layer (A); generally, the vinylaromatic polymer of layer (C), when present, is equal to that used as component (i) of the blend of layer (A).

Any known process for preparing a coupled multilayer structure can be used for the manufacture of the structure of the present invention.

Thus the structure of the present invention can be prepared, e.g., by lamination of two or more layers, passing them through rolls heated at temperatures ranging from 60 to 150°C. The coupling of the layers can also be carried out by coextrusion of the polymers or by the known extrusion coating method wherein one of the polymers is extruded onto a preformed layer of the other polymer.

The coupled multilayers of the present invention find particularly application in the fields of refrigerators, freezers and packaging, preferably food packaging.

The following examples are to further illustrate the invention without limiting the scope thereof.

In the examples:
The resistance to chemical etching was determined by introducing 100 ml of HCFC 123 (1,1-dichloro-2,2,2-trifluoroethane) into a 500 ml beaker and covering the beaker with the coupled multilayer so that the polyolefin layer faced the inside of the beaker and, therefore, was exposed to the HCFC 123 vapours.

In order to ensure a perfect sealing, the test piece was fixed to the surface of the beaker by silicone. The system was maintained at 30°C.

At regular intervals of 5 minutes, within the first 24 hours, and, then, of 12 hours, the test piece was removed and placed in an oven at 50°C for 1 hour. The test piece was then visually examined to determine the presence of blisters.

The resistance to chemical etching was taken as the minimum time of exposure to the HCFC 123 vapours necessary for the occurence of at least one blister on the layer covered by the polyolefin layer.

The adhesion degree between the layers was determined by the peeling test according to ASTM D 903.

The mechanical properties of the processing scraps were measured by determining the IZOD resilience and the elongation at break, by tensile stress tests, according to ASTM D 256 and D 638, respectively, on test pieces obtained by injection molding at 200-210°C of the scraps obtained during the processing of the coupled multilayer structure.

### EXAMPLE 1 (comparison)

A layer (thickness 0.1 mm) of linear low density polyethylene (LLDPE), sold by EXXON under the trade mark EXCORENE® LL 1201 XV and having a density of 0.926 g/cm³ and a M.F.I. (melt flow index) of 0.7 g/10 minutes (ASTM D 1238 - at 190°C and 2.16 kg), was coextruded, at about 200°C, onto a layer (thickness about 3 mm) of impact-resistant polystyrene containing 8% of polybutadiene rubber and having a M.F.I. of 4 g/10 minutes (according to ASTM D 1238, condition G).

The properties of the thus obtained coupled multilayer structure are listed in the following Table I.

### EXAMPLE 2 (comparison)

The production of the coupled multilayer structure of example 1 was repeated, except for interposing, by coextrusion, between the two layers an intermediate layer of an adhesive (thickness 0.1 mm) consisting of an EVA (ethylene-vinyl acetate) copolymer having a vinyl acetate content of 28% by weight, modified with maleic anhydride. This adhesive is sold by E.I. Du Pont de Nemours under the trade name BYNEL® CX A E 359.

The properties of the thus obtained coupled multilayer structure are listed in the following Table I.

### EXAMPLE 3

The production of the coupled multilayer structure of example 2 was repeated except for substituting the intermediate adhesive layer by one having the same thickness (0.1 mm) and consisting of a blend of:
- 50 parts by weight of impact-resistant polystyrene containing, dispersed in the polymeric materix, 8% by weight of polybutadiene rubber and 3% by weight of a linear block copolymer of the type S/B, containing 25% by weight of styrene and 75% by weight of butadiene and having an average molecular weight of 75,000 (SOLPRENE® 1205 produced and sold by Phillips Petroleum);
   and
- 50 parts by weight of a linear block copolymer of formula (VI) above comprising 57% by weight of butadiene and 43% by weight of styrene, produced and sold by ENICHEM Elastomeri under the trade name EUROPRENE® SOL T 168.

The properties of the thus obtained coupled multilayer structure are listed in the following Table I.

### EXAMPLE 4

The production of the coupled multilayer structure of example 3 was repeated, except for substituting the impact-resistant polystyrene layer containing 8% of polybutadiene rubber by one of the same thickness and consisting of an impact-resistant styrene polymer containing, dispersed in the polymeric matrix, 7.75% by weight of polybutadiene rubber and 3% by weight of a linear block copolymer (SOLPRENE® 1205 produced and sold by Phillips Petroleum) containing 25% by weight of styrene and 75% by weight of butadiene and having an average molecular weight of 75,000.

The properties of the thus obtained coupled multilayer structure are listed in the following Table I.

### EXAMPLE 5

The production of the coupled multilayer structure of example 3 was repeated, except for changing the thickness of each layer. Particularly, the thickness of each layer was:
- 0.3 mm layer of polyethylene;
- 0.3 mm layer of the blend of example 3, and
- 3 mm of an impact resistant polystyrene containing 8% of polybutadiene (see example 1).

The characteristics of the thus obtained coupled multilayer structure are listed in the following Table I.

### EXAMPLE 6

Example 5 was repeated, substituting the layer of the impact-resistant polystyrene containing 8% of polybutadiene by one of the same thickness (3 mm) and consisting of an impact-resistant polystyrene containing, dispersed in the polymeric matrix, 7.75% by weight of polybutadiene rubber and 3% by weight of a linear block copolymer (SOLPRENE® 1205) containing 25% by weight of styrene and 75% by weight of butadiene and having an average molecular weight of 75,000.

The properties of the thus obtained coupled multilayer structures are listed in the following Table I.

**TABLE I**

| EXAMPLE No. | 1 | 2 | 3 | 4 | 5 | 6 |
|---|---|---|---|---|---|---|
| PROPERTIES | | | | | | |
| . Resistance to chemical etching | 10 hours | more than 3 months | more than 3 months | more than 3 months | more than 3 months | more than 3 months |
| . Adhesion degree (g/cm) | 10 | 380 | 380 | 390 | 400 | 400 |
| .IZOD with notch at 23°C (J/m) | 40 | 50 | 110 | 170 | 170 | 270 |
| . Elongation at break (%) | 5 | 10 | 40 | 51 | 55 | 56 |

## Claims

1. Thermoplastic coupled multilayer structure comprising, in direct contact with each other:
(A) at least one layer of a blend consisting of (i) 70 to 30% by weight of a vinylaromatic polymer and (ii) 30 to 70% by weight of a vinylaromatic monomer-butadiene block copolymer;
(B) at least one polyolefin layer and, optionally,
(C) one or more layers of vinylaromatic polymer;
with the proviso that when layer(s) (C) is (are) present, layer (A) is interposed between layers (B) and (C).

2. Multilayer structure according to claim 1, wherein the number of the layers ranges from 2 to 10.

3. Multilayer structure according to any one of claims 1 and 2, wherein the thickness of layer (A) ranges from 10 to 500 µm and the thickness of each of the other layers (B) and (C) ranges from 10 µm to 5 mm.

4. Multilayer structure according to any one of the preceding claims, wherein the vinylaromatic polymer (i) includes a dispersed elastomeric phase, e.g., a diene rubber, in an amount of from 0.1 to 20, particularly from 4 to 15% by weight.

5. Multilayer structure according to claim 4, wherein the dispersed elastomeric phase comprises a mixture of diene rubber, in an amount of from 5 to 15 and preferably 6 to 12% by weight, and of vinylaromatic monomer-conjugated diene block copolymer, in an amount of from 0.5 to 5% by weight.

6. Multilayer structure according to claim 5, wherein the vinylaromatic monomer-conjugated diene block copolymer is of the linear type and contains from 20 to 60% by weight of recurring units of vinylaromatic monomer and from 80 to 40% by weight of recurring units of conjugated diene and preferably is of the structure:
B/S or (II)
S-(B/S) (III)
wherein S represents a polymeric block based on vinylaromatic monomer and B/S represents blocks of vinylaromatic monomer-conjugated diene copolymer of the "random" and/or "tapered" type.

7. Multilayer structure according to any one of the preceding claims, wherein the vinylaromatic monomer-butadiene block copolymer (ii) is of the linear, radial or star-shaped type and preferably is of the general formula (VI):
B₁ - S₁ - B₂ - S₂ (VI)
wherein:
- S₁ and S₂ represent non-elastomeric polymer blocks of vinylaromatic monomer which have the same or different molecular weights;
- B₁ and B₂ represent elastomeric polymer blocks based on butadiene which have the same or different molecular weights;
the average molecular weight thereof ranging from 30,000 to 250,000;
the total content of monomer units derived from butadiene being from 40 to 80% by weight;
the average molecular weight of block B₁ preferably ranging from 0.1 to 0.5 times that of block B₂;
the average molecular weight of block S₁ preferably ranging from 0.25 to 2.0 times that of block S₂; and
a random copolymeric segment of butadiene and vinylaromatic monomer units being preferably present between blocks B₁ and S₁.

8. Multilayer structure according to any one of the preceding claims, wherein the polyolefin layer (B) comprises polyethylene having a density of from 0.85 to 0.97 g/cm³.

9. Multilayer structure according to any one of the preceding claims, wherein the vinylaromatic polymer of the layer (C) is of the crystalline or impact-resistant type as defined in claims 5 to 7 and preferably is equal to that used as component (i) of the blend for layer (A).

## Patentansprüche

1. Thermoplastische gekuppelte Mehrschicht-Struktur, umfassend, indirektem Kontakt miteinander:
(A) mindestens eine Schicht einer Mischung, die aus (i) 70 bis 30 Gewichts-% eines vinylaromatischen Polymers und (ii) 30 bis 70 Gewichts-% eines vinylaromatisches Monomer-Butadien-Blockcopolymers besteht;
(B) mindestens eine Polyolefin-Schicht und, gegebenenfalls,
(C) eine oder mehrere Schichten von vinylaromatischem Polymer;
mit der Maßgabe, daß wenn die Schicht(en) (C) anwesend ist (sind), die Schicht (A) sich zwischen den Schichten (B) und (C) befindet.

2. Mehrschicht-Struktur nach Anspruch 1, in welcher die Zahl der Schichten im Bereich von 2 bis 10 liegt.

3. Mehrschicht-Struktur nach irgendeinem der Ansprüche 1 und 2, in welcher die Dicke der Schicht (A) im Bereich von 10 bis 500 µm liegt und die Dicke einer jeden der anderen Schichten (B) und (C) im Bereich von 10 µm bis 5 mm liegt.

4. Mehrschicht-Struktur nach irgendeinem der vorangehenden Ansprüche, in welcher das vinylaromatische Polymer (i) eine dispergierte elastomere Phase, z.B. einen Dien-Kautschuk, in einer Menge von 0,1 bis 20, insbesondere 4 bis 15 Gewichts-% einschließt.

5. Mehrschicht-Struktur nach Anspruch 4, in welcher die dispergierte elastomere Phase eine Mischung von Dien-Kautschuk, in einer Menge von 5 bis 15 und vorzugsweise 6 bis 12 Gewichts-%, und von vinylaromatisches Monomer-konjugiertes Dien-Blockcopolymer, in einer Menge von 0,5 bis 5 Gewichts-%, umfaßt.

6. Mehrschicht-Struktur nach Anspruch 5, in welcher das vinylaromatisches Monomer-konjugiertes Dien-Blockcopolymer vom linearen Typ ist und 20 bis 60 Gewichts-% wiederkehrende Einheiten von vinylaromatischem Monomer und 80 bis 40 Gewichts-% wiederkehrende Einheiten von konjugiertem Dien enthält und vorzugsweise die Struktur:
B/S oder (II)
S-(B/S) (III)
aufweist, worin S für einen auf vinylaromatischem Monomer basierenden polymeren Block steht und B/S Blöcke von vinylaromatisches Monomer-konjugiertes Dien-Copolymer vom "statistischen" und/oder "konischen" Typ repräsentiert.

7. Mehrschicht-Struktur nach irgendeinem der vorangehenden Ansprüche, in welcher das vinylaromatisches Monomer-Butadien-Blockcopolymer (ii) vom linearen, radialen oder sternförmigen Typ ist und vorzugsweise die allgemeine Formel (VI) aufweist:
B₁ - S₁ - B₂ - S₂ (VI)
worin:
- S₁ und S₂ nicht-elastomere Polymerblöcke von vinylaromatischem Monomer, die identische oder unterschiedliche Molekulargewichte aufweisen, repräsentieren;
- B₁ und B₂ elastomere Polymerblöcke auf Basis von Butadien darstellen, die identische oder unterschiedliche Molekulargewichte aufweisen,
wobei das durchschnittliche Molekulargewicht desselben im Bereich von 30000 bis 250000 liegt;
wobei der Gesamtgehalt von Monomer-Einheiten, die von Butadien abgeleitet sind, 40 bis 80 Gewichts-% beträgt;
wobei das durchschnittliche Molekulargewicht von Block B₁ vorzugsweise im Bereich vom 0,1- bis 0,5-fachen desjenigen von Block B₂ liegt;
wobei das durchschnittliche Molekulargewicht von Block S₁ vorzugsweise im Bereich vom 0,25- bis 2,0-fachen desjenigen von Block S₂ liegt; und
wobei vorzugsweise ein statistisches Copolymer-Segment von Butadien- und vinylaromatisches Monomer-Einheiten zwischen den Blöcken B₁ und S₁ vorhanden ist.

8. Mehrschicht-Struktur nach irgendeinem der vorangehenden Ansprüche, in welcher die Polyolefin-Schicht (B) Polyethylen mit einer Dichte von 0,85 bis 0,97 g/cm³ umfaßt.

9. Mehrschicht-Struktur nach irgendeinem der vorangehenden Ansprüche, in welcher das vinylaromatische Polymer der Schicht (C) vom kristallinen oder schlagzähen Typ wie in den Ansprächen 5 bis 7 definiert ist und vorzugsweise gleich demjenigen ist, das als Komponente (i) der Mischung für die Schicht (A) eingesetzt wird.

## Revendications

1. Structure multicouche thermoplastique, à couches couplées, comprenant, en contact direct l'une avec l'autre :
(A) au moins une couche d'un mélange constitué de (i) 70 à 30% en poids d'un polymère vinylaromatique et de (ii) 30 à 70% en poids d'un copolymère à blocs monomère vinylaromatique-butadiène,
(B) au moins une couche de polyoléfine et, éventuellement,
(C) une ou plusieurs couches de polymère vinylaromatique, étant entendu que, lorsque la couche ou les couches (C) est (sont) présente(s), la couche (A) est interposée entre les couches (B) et (C).

2. Structure multicouche selon la revendication 1, dans laquelle le nombre de couches est compris dans l'intervalle allant de 2 à 10.

3. Structure multicouche selon la revendication 1 ou 2, pour laquelle l'épaisseur de la couche (A) est comprise dans l'intervalle allant de 10 à 500 µm et l'épaisseur de chacune des autres couches (B) et (C) est comprise dans l'intervalle allant de 10 µm à 5 mm.

4. Structure multicouche selon l'une quelconque des revendications précédentes, dans laquelle le polymère vinylaromatique (i) renferme une phase élastomère dispersée, par exemple un caoutchouc diène, en une proportion de 0,1 à 20% en poids, en particulier de 4 à 15% en poids.

5. Structure multicouche selon la revendication 4, dans laquelle la phase élastomère dispersée comprend un mélange de caoutchouc diène, présent en une proportion de 5 à 15% en poids et de préférence de 6 à 12% en poids, et de copolymère à blocs monomère vinylaromatique-diène conjugué, présent en une proportion de 0,5 à 5% en poids.

6. Structure multicouche selon la revendication 5, pour laquelle le copolymère à blocs monomère vinylaromatique-diène conjugué est du type linéaire et contient 20 à 60% en poids de motifs de monomère vinylaromatique et 80 à 40% en poids de motifs de diène conjugué, et a de préférence la structure :
B/S ou (II)
S-(B/S) (III)
dans laquelle S représente un bloc polymère à base de monomère vinylaromatique et B/S représente les blocs d'un copolymère monomère vinylaromatique-diène conjugué, du type "statistique" et/ou du type "dégressif".

7. Structure multicouche selon l'une quelconque des revendications précédentes, pour laquelle le copolymère à blocs monomère vinylaromatique-butadiène (ii) est du type linéaire, radial ou en étoile, et répond de préférence à la formule générale (VI) :
B₁ - S₁ - B₂ - S₂ (VI)
dans laquelle :
S₁ et S₂ représentent des blocs polymères non élastomères de monomère vinylaromatique, qui ont des masses moléculaires identiques ou différentes, et
B₁ et B₂ représentent des blocs polymères élastomères, à base de butadiène, qui ont des masses moléculaires identiques ou différentes,
la masse moléculaire moyenne dudit copolymère étant comprise dans l'intervalle allant de 30.000 à 250.000,
la proportion totale de motifs monomères issus du butadiène étant de 40 à 80% en poids,
la masse moléculaire moyenne du bloc B₁ étant égale de préférence à 0,1 à 0,5 fois celle du bloc B₂,
la masse moléculaire moyenne du bloc S₁ étant de préférence égale à 0,25 fois à 2,0 fois celle du bloc S₂, et
un segment copolymère statistique, constitué de motifs de butadiène et de monomère vinylaromatique, étant présent de préférence entre les blocs B₁ et S₁.

8. Structure multicouche selon l'une quelconque des revendications précédentes, dans laquelle la couche de polyoléfine (B) renferme un polyéthylène ayant une densité de 0,85 à 0,97 g/cm³.

9. Structure multicouche selon l'une quelconque des revendications précédentes, dans laquelle le polymère vinylaromatique de la couche (C) est du type cristallin ou du type résistant aux chocs, tel que défini dans les revendications 5 à 7, et est de préférence identique à celui utilisé comme constituant (i) du mélange pour la couche (A).
